# EUROPÄISCHE PATENTSCHRIFT

(11) **EP 1 902 252 B1**
(45) Veröffentlichungstag und Bekanntmachung des Hinweises auf die Patenterteilung: **23.02.2011**
(21) Anmeldenummer: 06743179.1
(22) Anmeldetag: 14.06.2006
(51) Int. Cl.: F21V 29/00

(54) **KÜHLSYSTEM FÜR EINEN SCHEINWERFER**
COOLING SYSTEM FOR A PROJECTOR
SYSTEME DE REFROIDISSEMENT POUR UN PROJECTEUR

(30) Priorität: 22.06.2005 DE 102005029671
(43) Veröffentlichungstag der Anmeldung: 26.03.2008
(73) Patentinhaber: Arnold & Richter Cine Technik GmbH & Co. Betriebs KG, 80799 München (DE)
(72) Erfinder: MELZNER, Erwin, 83112 Frasdorf (DE)
(74) Vertreter: Ninnemann, Detlef
(86) Internationale Anmeldenummer: PCT/EP2006/005950
(87) Internationale Veröffentlichungsnummer: WO 2006/136387

(56) Entgegenhaltungen:
- EP-A- 0 389 659
- EP-A- 0 751 339
- WO-A-2005/095853
- US-A- 5 515 254

## Beschreibung

Die Erfindung betrifft ein Kühlsystem für einen Scheinwerfer gemäß dem Oberbegriff des Anspruchs 1.

Aus der WO 2004/029 507 A1 ist ein Scheinwerfer bekannt, der ein in einem Scheinwerfergehäuse angeordnetes ein- oder zweiseitig gesockeltes Leuchtmittel, das aus einer Lampe oder aus einem Brenner, beispielsweise aus einer Entladungslampe in Form einer Halogen-Metalldampflampe, besteht, und einen Reflektor aufweist, der das von dem Leuchtmittel abgegebene Licht in Richtung einer frontseitigen Öffnung des Scheinwerfergehäuses reflektiert, die durch ein transparentes Abdeckelement, beispielsweise eine Schutzscheibe oder Linsenscheibe, verschließbar ist.

Neben der Abstrahlung von sichtbaren Lichtstrahlen erzeugt ein brennendes Leuchtmittel in seinem Lichtbogen bzw. Filament auch im infraroten Spektralbereich liegende, nicht sichtbare Wärmestrahlung, die durch die folgenden drei Prozesse an die Umgebung des Leuchtmittels abgegeben wird:
a) die Wärmestrahlung wird von den das Leuchtmittel umgebenden Bauteilen wie Reflektor, Leuchtmittelsockel und Zuleitungen zum Leuchtmittel sowie vom Scheinwerfergehäuse teilweise absorbiert, die dadurch in ihren Materialeigenschaften negativ beeinflusst werden und selbst als sekundäre Wärmequelle wirken,
b) über die elektrischen Kontakte und über den Keramikkörper des Leuchtmittelsockels findet eine Wärmeleitung statt und
c) die Umgebungsluft des Leuchtmittels wird aufgeheizt, steigt nach oben und zieht in einem konvektiven Kühlungsprozess kühlere Luft von unten nach.

Um den letztgenannten Prozess zu unterstützen und einen Scheinwerfer großer Lichtleistung mit kompakter Bauform zu schaffen, besteht das aus der WO 2004/029 507 A1 bekannte Scheinwerfergehäuse aus einem oberen, zylinderförmigen Scheinwerfergehäuseteil und einem unteren, quaderförmig ausgebildeten Scheinwerfergehäuseteil, an dem Belüftungsschächte mit voneinander getrennten Belüftungskanälen angeordnet sind. Die Belüftungskanäle sind durch Lamellen voneinander getrennt, die innerhalb des Belüftungsschachtes einen an die Lufteintrittsöffnungen angrenzenden ersten Lamellenabschnitt und einen an die Luftaustrittsöffnungen angrenzenden zweiten, gegenüber dem ersten Lamellenabschnitt abgeknickten Lamellenabschnitt aufweisen.

Aus der US 5,172,975 A ist ein Scheinwerfer mit einem Leuchtmittel, einem Reflektor und einer Lichtaustrittsöffnung in einem zylinderförmigen Scheinwerfergehäuse bekannt, an dem ebenfalls zur konvektiven Kühlung der Umgebung des wärmeabgebenden Leuchtmittels umlaufende, durch Lamellen begrenzte Belüftungskanäle ausgebildet sind. Die Lamellen sind außerhalb des zylindrischen Scheinwerfergehäuses abgeknickt und an ihren Enden umgebördelt, so dass zum einen der Austritt von Licht aus dem Inneren des Scheinwerfergehäuses vermieden und zum anderen die Luftströmung senkrecht vom Scheinwerfergehäuse weggerichtet ist.

Aus der US 1 758 290 A ist ein Scheinwerfergehäuse mit an den Gehäusewänden angeordneten Belüftungsschächten mit voneinander getrennten Belüftungskanälen bekannt, die durch Lamellen voneinander getrennt sind, so dass sich gleichförmige Belüftungskanäle ergeben, über die Kühlluft in das Innere des Scheinwerfergehäuses strömt. Die ins Innere des Scheinwerfergehäuses ragenden Enden der Lamellen oberhalb und unterhalb der optischen Achse des Scheinwerfers sind in jeweils entgegengesetzte Richtungen nochmals abgeknickt, so dass die Enden der oberhalb der optischen Achse angeordneten Lamellen zur Unterseite des Scheinwerfergehäuses gerichtet sind, während die unterhalb der optischen Achse angeordneten Enden der Lamellen zur Oberseite des Scheinwerfergehäuses gerichtet und beide Abschnitte in einem mittleren horizontalen Teil miteinander verbunden sind, so dass durch die unterschiedliche Ausrichtung der im Innern des Scheinwerfergehäuses befindlichen Enden der Lamellen eine verbesserte Kühlluftzirkulation durch das Scheinwerfergehäuse erzielt wird.

Aus der EP 0 389 659 A1 ist ein Scheinwerfer in Form eines Strahlers in Kompaktbauweise bekannt, der eine einseitig oder zweiseitig gesockelte Lampe, ein Reflektorteil, das aus einem ringförmigen Rahmenträger besteht, in den ein parabolischer Reflektor eingesetzt ist und auf dessen Lichtaustrittsseite Halterungen für eine Glasscheibe angeordnet sind, ein blockförmiges Gehäuse zur Aufnahme von wärmeempfindlichen elektrischen und elektronischen Bauteilen und einen Kühler aufweist, der seitlich am Reflektorteil in Höhe der Lampe angeordnet ist. Der Kühler weist einen in Erstreckung der Lampenachse ausgerichteten Flanschansatz auf, an den sich außerhalb des Reflektorteils ein Kühlflächenkörper anschließt, der als Kühlrippenblock, Lochplattenanordnung, Lamellenanordnung oder als Zapfkonflguration ausgebildet ist. Die Lampenfassung ist in gut wärmeleitendem Kontakt in den als Rohrflansch ausgeführten Flanschansatz des Kühlers eingesetzt, wobei der Kühler mit seinem Flanschansatz durch eine Öffnung des Reflektors in das Reflektorinnere hineinragt, während der Kühlflächenkörper in seiner gesamten Breite über die nahe Seitenwand des blockförmigen Gehäuses übersteht, so dass die im Bereich des Kühlflächenkörpers erhitzte Luft am Gehäuse vorbeiströmen und dabei die von der Lampe abgegebene Wärme durch Konvektion über den Kühler an dem die temperaturempfindlichen elektrischen bzw. elektronischen Bauteile enthaltenden blockförmigen Gehäuse vorbei an die Umgebungsluft abgeführt werden kann.

Aus der US 5 515 254 A ist ein Farbmischscheinwerfer mit einem Gehäuse bekannt, das beweglich in einem Scheinwerferbügel angeordnet ist. In einem ersten Abschnitt des Gehäuses sind ein Leuchtmittel und eine Kühleinrichtung angeordnet, während ein zweiter Gehäuseabschnitt bewegliche Farbfilter und eine Linsenabdeckung enthält. Die Kühleinrichtung besteht aus mehreren konturierten, externen Kühlrippen, die in den aus Aluminiumguss bestehenden ersten Gehäuseabschnitt eingearbeitet sind und eine etwa ellipsoidförmige Außenkontur aufweisen, in der ein elliptischer Reflektor angeordnet ist und das Leuchtmittel umgibt. Das Gehäuse umgibt mit einer ellipsoidförmigen Ausnehmung das Leuchtmittel, das in eine Fassung eingesetzt ist, die von einer ringförmigen Ausnehmung der Kühleinrichtung umgeben ist. Mit den konturierten, externen Kühlrippen sind interne Kühlrippen ausgerichtet, die um eine innere ringförmige Peripherie eines ringförmigen Abschnitts angeordnet sind und eine größere wärmeaufnehmende Fläche bilden, während die Wärme über zusätzliche Ventilationsöffnungen abgeführt wird. Den vorderen Abschluss des ersten Gehäuseabschnittes bildet eine Platte, die die vom Leuchtmittel abgegebene Wärme vom zweiten, vorderen Abschnitt des Gehäuses abhält.

Aus der EP 0 751 339 ist eine Beleuchtungseinrichtung mit einem paraboloidförmigen Reflektor, einer Leuchtmittelanordnung und einem zweiteiligen, rohrförmigen Frontgehäuse bekannt, in dem eine frontseitige Linse angeordnet ist. In der optischen Achse des paraboloidförmigen Reflektors ist eine zentrale Öffnung zur Aufnahme der Leuchtmittelanordnung vorgesehen, die aus dem Leuchtmittel und einer Leuchtmittelfassung aus Aluminiumguss oder Keramik mit mehreren parallelen Kühlrippen besteht. Der Reflektor und das Frontgehäuse bestehen aus einem gut wärmeleitenden Material wie Aluminium. Die konvexe Rückseite des Reflektors weist mehrere einstückig an den Reflektor angeformte, parallele Kühlrippen auf, die die von dem Leuchtmittel abgegebene Wärme durch Konvektionskühlung an die Umgebung ableiten. Die Leuchtmittelfassung, das Leuchtmittel, der Reflektor und die Kühleinrichtung bilden einen Teil des Scheinwerfergehäuses aus, wobei die Kühlrippen an der Außenseite des Reflektors angeformt sind.

Aufgabe der vorliegenden Erfindung ist es, ein Kühlsystem für einen Scheinwerfer der eingangs genannten Art anzugeben, das die von einem Leuchtmittel abgegebene Wärme geräuschfrei und mit größtmöglicher Wirkung aus dem Scheinwerfergehäuse abführt und im Innern des Scheinwerfergehäuses befindliche Bauteile vor der Wärmestrahlung schützt und/oder wirksam kühlt.

Diese Aufgabe wird erfindungsgemäß durch die Merkmale des Anspruchs 1 gelöst.

Die erfindungsgemäße Lösung stellt ein Kühlsystem für einen Scheinwerfer bereit, das die von der Lampe bzw. einem Brenner abgegebene Wärme geräuschfrei, mit maximaler Wirkung aus dem Scheinwerfergehäuse abführt und im Innern des Scheinwerfergehäuses befindliche Bauteile vor der Wärmestrahlung schützt und/oder wirksam kühlt.

Der erfindungsgemäßen Lösung liegt die Überlegung zugrunde, die von dem als Lampe oder Brenner ausgebildeten Leuchtmittel über die drei oben genannten Prozesse abgegebene Wärme mit größtmöglicher Effektivität aus dem Scheinwerfer abzuführen, indem die konvektive Kühlungseinrichtung das Leuchtmittel teilweise einschließt und eine Konvektionsströmung erzeugt, die die von dem Leuchtmittel abgegebene Wärme unmittelbar ableitet, so dass
- das Kühlsystem vom Scheinwerfergehäuse zumindest teilweise abgekoppelt wird und dabei eine größere Gestaltungsfreiheit für das Scheinwerfergehäuse und die Unterbringung von Bauteilen des Scheinwerfers ermöglicht,
- die von dem Leuchtmittel abgegebene Wärmestrahlung auf gefährdete oder wärmeempfindliche Bauteile wie beispielsweise die Lampenkabel von der konvektiven Kühlungseinrichtung abgeschirmt wird,
- im Innern des Scheinwerfergehäuses befindliche Bauteile, die nicht vor der Wärmestrahlung geschützt werden können, wie beispielsweise der Reflektor, oder zu denen eine direkte Wärmeleitung stattfindet, wie beispielsweise der Leuchtmittelsockel, durch eine optimierte Ankopplung an die konvektive Kühlungseinrichtung optimal gekühlt werden und
- eine maximale Konvektionsströmung unabhängig von der Stellung des Scheinwerfers erzeugt wird, die auch bei geneigt betriebenem Scheinwerfer voll wirksam ist.

Im Unterschied zu den aus dem Stand der Technik bekannten Kühlsystemen, bei denen durch die Anordnung von Kühllamellen und Kühlschächten am Scheinwerfergehäuse die von dem Leuchtmittel des Scheinwerfers abgegebene Wärmestrahlung durch verstärkte Kühlluftzufuhr durch Konvektion abgeführt wird, wird somit nach der Erfindung die Wärme am Ort der Wärmequelle, nämlich unmittelbar an dem Leuchtmittel selbst aufgenommen und mit größtmöglicher Wirkung aus dem Scheinwerfer abgeführt, so dass im Innern des Scheinwerfergehäuses befindliche Bauteile und insbesondere wärmeempfindliche Bauteile entweder vollständig oder durch eine optimale Kühlung vor einer Überhitzung geschützt werden.

Durch die Ausbildung von Kühllamellenpaketen mit mehreren Kühllamellen, deren Mittelebene senkrecht zur Neigungsachse des Scheinwerfers ausgerichtet ist und die parallel oder geneigt zueinander angeordneten sind, wird einerseits Kühlluft gezielt an die Wärmequelle herangeführt und andererseits die von der Wärmequelle abgegebene, erhitzte Luft in dem oberhalb der Wärmequelle befindlichen Kühllamellenpaket zur Außenseite des Scheinwerfergehäuses abgeleitet, wobei die erhitzte Luft an den Kühllamellen im Wesentlichen laminar entlang strömt und erst beim Austritt aus dem Kühllamellenpaket Wirbel ausbildet, so dass die Wärmelast mit größtmöglicher Wirkung und in kürzester Zeit abgeführt wird.

Bevorzugt erstrecken sich die Kühllamellen über die gesamte Höhe des Scheinwerfers und ermöglichen somit eine weitestgehende Trennung des Kühlsystems vom Innenraum des Scheinwerfergehäuses.

In einer vorteilhaften Ausgestaltung der Erfindung werden die Kühllamellenpakete durch beidseitige Seitenbleche zur Bildung eines konvektiven Kühlkastens begrenzt, der in dem zwischen dem oberen und unteren Kühllamellenpaket ausgebildeten Zwischenraum die Lampenfassung aufnimmt.

Vorzugsweise erzeugt die konvektive Kühlungseinrichtung eine im Wesentliche schnelle laminare Luftströmung, die die vom Leuchtmittel abgegebene Wärme schnellstmöglich und mit größtmöglicher Effektivität aus dem Scheinwerfer abführt, wobei die das Leuchtmittel teilweise einschließende konvektive Kühlungseinrichtung die schnelle, laminare Luftströmung auch dann unterstützt und wirksam erhält, wenn der Scheinwerfer geneigt betrieben wird. Die Kühllamellen der konvektiven Kühlungseinrichtung können wahlweise parallel zueinander in Gavitationsrichtung, d. h. senkrecht innerhalb des Scheinwerfergehäuses ausgerichtet oder insbesondere bei asymmetrischer Erwärmung derart gegeneinander geneigt sein, dass in allen zwischen den Kühllamellen ausgebildeten Spalten eine im Wesentlichen laminare Kühlluftströmung erhalten bleibt.

Durch Kühllamellen unterschiedlicher Länge, wobei insbesondere die inneren Kühllamellen länger sind als die äußeren Kühllamellen, wird eine Verwirbelung der aus den Kühllamellen austretenden erhitzten Luft gering gehalten. Alternativ oder in Ergänzung zu den unterschiedlich langen Kühllamellen können die Kühllamellen an ihrem Wärme abgebenden Ende auch nach außen abgebogen sein, so dass das Auftreten von die konvektive Luftströmung behindernden Wirbeln deutlich verringert wird.

Vorzugsweise wird die Spaltdicke der zwischen den Kühllamellen ausgebildeten Spalten zumindest in Abhängigkeit von der Wandtemperatur der Kühllamellen und der Höhe der Kühllamellenpakete bestimmt.

Beim Wärmetransport innerhalb der Kühllamellenpakete befindet sich die zirkulierende Luftströmung in Kontakt mit der erhitzten Oberfläche der Kühllamellen, so dass die darüber befindliche, mehr oder weniger dünne Luftschicht durch molekulare Wärmeleitung erwärmt wird, sich dabei ausdehnt und einen Auftrieb erfährt. Dieser Auftrieb bewirkt eine Beschleunigung der erwärmten Luftpakete entgegen der Schwerkraft nach oben bis sich in der so entstehenden natürlichen Konvektionsströmung die Reibungskräfte an der Wand der Kühllamellen sowie im Inneren der Strömung einerseits und die Auftriebskräfte andererseits die Waage halten. Für eine optimale Kühlwirkung durch natürliche Konvektion müssen daher die Reibungskräfte möglichst klein bleiben, damit der Zustrom frischer, das heißt kühler Luft, an den Wänden der Kühllamellen nur wenig behindert wird. Aus diesem thermodynamischen Prozess kann für unterschiedliche Wandtemperaturen der Kühllamellen ein Kühlwärmestrom als Funktion der Spaltdicke für unterschiedliche Schachthöhen der Kühllamellenpakete ermittelt werden. Aus den so ermittelten Kurven des Wärmestromes über der Spaltdicke bzw. Schachthöhe der Kühllamellenpakete kann ein optimaler Abstand der Kühllamellen für eine möglichst gute Kühlung bei gleichzeitig minimalem Bauraum für die Kühllamellenpakete bestimmt werden.

Durch den teilweisen Einschluss des Wärme abgebenden Leuchtmittels in dem konvektiven Kühlkasten wird zum einen durch eine optimierte laminare Konvektionsströmung die vom Leuchtmittel abgegebene Wärme optimal abgeführt und durch die Seitenbleche verhindert, dass Wärmestrahlung in dem nicht mit der optimierten laminaren Luftströmung beaufschlagten Raum im Innern des Scheinwerfergehäuses erhitzt wird und die aufgenommene Wärme nur über Sekundäremission über das Scheinwerfergehäuse abgeben kann.

Die Ausbildung eines das Leuchtmittel teilweise einschließenden konvektiven Kühlkastens erhöht die Wirksamkeit der erzeugten konvektiven Luftströmung und begrenzt die Abfuhr der von dem Leuchtmittel abgegebenen Wärme im Wesentlichen auf den konvektiven Kühlkasten, so dass die Dimensionierung und Gestaltung des Scheinwerfergehäuses nicht mehr wesentlich von konstruktiven Merkmalen zur Abfuhr der vom Leuchtmittel abgegebenen Wärme bestimmt wird. Dies ermöglicht neben einer geringeren Baugröße des Scheinwerfergehäuses größere Freiheitsgrade bei der Gestaltung des Scheinwerfergehäuses und bietet zusätzlich die Möglichkeit, hitzegefährdete Bauteile des Scheinwerfers in das Innere des Scheinwerfergehäuses zu verlegen.

Vorzugsweise ist der konvektive Kühlkasten nicht wesentlich breiter als das Leuchtmittel selbst, so dass das Scheinwerfergehäuse entweder in dem der Abstrahlrichtung des Scheinwerfers entgegen gesetzten Ende des Scheinwerfergehäuses schmaler als herkömmliche Scheinwerfergehäuse ausgebildet werden kann oder der Innenraum des Scheinwerfergehäuses, der sich durch die Anordnung des konvektiven Kühlkastens deutlich weniger aufheizt als der Innenraum bei herkömmlichen, voll durchlüfteten Scheinwerfern, für die Unterbringung und Anordnung von Kabeln, elektronischen Bauteilen oder anderen hitzeempfindlichen Bauteilen genutzt werden kann.

Zur Abschirmung des von dem Leuchtmittel abgegebenen Streulichts und als Schutz gegen Spritzwasser wird das obere Kühllamellenpaket oder der konvektive Kühlkasten aus dem oberen Teil des Scheinwerfergehäuses herausgeführt und durch eine Abdeckplatte abgedeckt, die zum Scheinwerfergehäuse gerichtete abgewinkelte Enden aufweist.

Bei der Ausbildung eines konvektiven Kühlkastens weist die Lampenfassung vorzugsweise obere und untere kammförmige Ausprägungen oder Einschnitte auf, in die zumindest ein Teil der Kühllamellen mit Bewegungsspielraum eingreift.

Durch diese Maßnahme ist ein optimaler Wärmeübergang von der Lampenfassung zu den Kühllamellen bzw. dem konvektiven Kühlkasten gewährleistet, ohne dass zwischen der Lampenfassung und den Kühllamellen bzw. dem Kühlkasten Wärmespannungen auftreten und zur Beschädigung der Lampenfassung bzw. der Kühllamellen führen können.

Zur optimalen Kühlung des der Wärmestrahlung des Leuchtmittels in besonderem Maße ausgesetzten Reflektors sowie zur Erzielung einer besseren Kühlungswirkung auch beim Neigen des Scheinwerfers sind die in Abstrahlrichtung des Scheinwerfers vorderen Kanten der Kühllamellen der Form des Reflektors angepasst und umfassen den Reflektor im Wesentlichen, wobei die Vorderkanten der Kühllamellen entweder am Reflektor anliegen oder am Reflektor befestigt sind.

Zur weiteren Optimierung des Wärmeübergangs vom Reflektor zu den Kühllamellen bzw. zum konvektiven Kühlkasten kann die Rückseite des Reflektors mit Kühllamellen versehen werden, die kammförmig in die zwischen den Kühllamellen des konvektiven Kühlkastens ausgebildeten Spalte eingreifen. Damit wird auch ein optimaler Wärmeübergang dann sichergestellt, wenn der Reflektor gegenüber dem Kühlkasten oder der Kühlkasten zusammen mit dem im Kühlkasten teilweise angeordneten Leuchtmittel gegenüber dem Reflektor bewegt wird.

Eine weitere Entlastung des Reflektors von der vom Leuchtmittel abgegebenen Wärmestrahlung wird nach einem weiteren Merkmal der Erfindung dadurch erzielt, dass der Reflektor

Lüftungsöffnungen aufweist, die in die zwischen den Kühllamellen ausgebildeten Spalte einmünden.

Diese weitere Ausgestaltung der Erfindung erweist sich besonders vorteilhaft in Verbindung mit Facetten-Reflektoren, da diese eine diffuse Lichtstreuung bewirken, so dass die Herausnahme einzelner Facetten oder Teile einzelner Facetten keine Auswirkung auf die Lichtverteilung und nur minimale Auswirkungen auf die von dem Scheinwerfer abgegebene Lichtmenge hat.

In einer Variante des Kühlsystems für einen Scheinwerfers kann eine Aussparung im Reflektor vorgesehen sein, die dadurch gebildet ist, dass ein eine oder mehrere Zeilen von Facetten umfassender ringförmiger Bereich oder ein eine oder mehrere Spalten von Facetten umfassender sektorenförmiger Bereich des Reflektors freigelassen ist. Durch eine so geschaffene Aussparung kann beispielsweise eine Kühlluftströmung in den Reflektor hinein und durch den Reflektor hindurch strömen.

Um die durch die Aussparung bewirkten Lichtverluste zu verringern, ist die ringförmige und/oder spaltenförmige Aussparung dabei durch einen radial beabstandeten, aus reflektierenden Facetten gebildeten Abschnitt abgedeckt, der von einer möglichen Lampenposition auf der Reflektorachse aus betrachtet die Aussparung vollständig überdeckt und sich in etwa parallel zur Oberfläche des Reflektors erstreckt. Insbesondere kann der Abschnitt zur Abdeckung der Aussparung durch einen in seinen Dimensionen gegenüber dem im Reflektor ausgesparten Bereich vergrößerten Ring und/oder Sektor ausgebildet sein, wobei der Ring bzw. der Sektor von Facetten dabei so beschaffen ist, dass er von der Reflektorachse aus betrachtet vor oder hinter der eigentlichen Oberfläche des Reflektors angeordnet ist. Auf diese Weise ist eine Unterbrechung im Reflektor für das Eindringen des Kühlluftstroms bei einer gleichzeitig optisch nahezu unveränderte Reflektoranordnung geschaffen, so dass die durch die Aussparung bewirkten Lichtverluste minimiert sind.

Durch eine insbesondere hinsichtlich der Oberflächenformgebung und der Anordnung veränderte Ausbildung der Facetten, die den radial beabstandeten, beispielsweise ringförmigen oder spaltenförmigen Abschnitt zur Abdeckung der Aussparung bilden, kann dabei bewirkt werden, dass die Lichtverteilung des mit der Aussparung versehenen Reflektors im Vergleich zu dem Reflektor ohne Aussparung nicht verändert ist, so dass die Reflektoranordnung die gewünschte Lichtverteilung erzeugt.

In einer weiteren Ausgestaltung der erfindungsgemäßen Lösung ist zwischen dem Glasgefäß und den Kontaktstiften des Leuchtmittels ein Wärmeableitblech angeordnet und auf die Kühlschächte der Kühllamellenpakete ausgerichtet.

Diese weitere Ausgestaltung der erfindungsgemäßen Lösung verbessert die Abschirmung gefährdeter Bauteile wie die elektrischen Kontakte und elektrischer Leitungen vor der vom Leuchtmittel abgegebenen Wärmestrahlung, wobei die erhitzte Luft von der Lampenfassung nach oben oder unten in die Kühllamellenpakete bzw. in die zwischen den Kühllamellen ausgebildeten Kühlschächte abgeleitet wird, auch wenn der Scheinwerfer geneigt wird.

Zur optimierten Wärmeableitung auch bei geneigtem Scheinwerfer ist das Wärmeableitblech V-, U- oder S-förmig ausgebildet und kann in einer weiteren Ausgestaltung der erfindungsgemäßen Lösung unmittelbar mit dem Leuchtmittelsockel verbunden werden.

Alternativ kann das Wärmeableitblech mit der Lampenfassung, insbesondere mit der Lampenklemmung verbunden werden. Wesentlich hierbei ist, dass das Wärmeableitblech möglichst formschlüssig am Lampenhals anliegt, um den Strom der heißen Luft nach hinten, das heißt entgegen der Abstrahlrichtung des Scheinwerfers abzuschotten.

Die erfindungsgemäße Lösung eignet sich besonders für Scheinwerfer, bei denen das zylinderförmige Leuchtmittel in axiale Richtung des Scheinwerfers ausgerichtet und in eine zentrale Öffnung des Reflektors eingesetzt ist. Bei diesem axialen optischen System befindet sich der Licht abgebende Glaszylinder des Leuchtmittels innerhalb des Reflektors, während der Lampensockel von der konvektiven Kühlungseinrichtung, das heißt von den Kühllamellen, den Kühllamellenpaketen oder dem konvektiven Kühlkasten eingefasst wird und sich die der Kontur des Reflektors angepassten Vorderkanten der Kühllamellen an die Rückseite des Reflektors zur optimalen Wärmeübertragung anlegen. Dadurch ist auch bei einer axialen Verschiebung des Leuchtmittels zur Verhinderung des Abstrahlwinkels eine größtmögliche Effektivität bei der Abfuhr der vom Leuchtmittel ausgehenden Wärmelast gewährleistet.

Alternativ kann das Leuchtmittel in Gravitationsrichtung (senkrecht) ausgerichtet sein und die Kühllamellenpakete oder der konvektive Kühlkasten am Reflektor anliegen oder mit dem Reflektor verbunden werden oder das Leuchtmittel quer zur Gravitationsrichtung (waagerecht) ausgerichtet und in einer Aussparung des Reflektors angeordnet werden, während die Kühllamellenpakete oder der konvektive Kühlkasten am Reflektor anliegen oder mit dem Reflektor verbunden sind.

Anhand eines in der Zeichnung dargestellten Ausführungsbeispieles sollen der der Erfindung zugrunde liegende Gedanke sowie weitere Merkmale und Vorteile der Erfindung näher erläutert werden. Es zeigen:
- Fig. 1: eine Seitenansicht eines kompakten Scheinwerfers mit einer konvektiven Kühlungseinrichtung;
- Fig. 2: eine teilweise geschnittene perspektivische Ansicht des Scheinwerfers gemäß Fig. 1;
- Fig. 3: einen Schnitt durch den Scheinwerfer gemäß den Fig. 1 und 2 entlang der Schnittlinie III-III;
- Fig. 4: eine perspektivische Teilansicht eines konvektiven Kühlkastens und Reflek- tors des Scheinwerfers gemäß den Fig. 1 bis 3;
- Fig. 5: eine perspektivische Teilansicht einer axial ausgerichteten, in den konvektiven Kühlkasten teilweise eingeschlossenen Lampe;
- Fig. 6: einen Längsschnitt durch den Scheinwerfer gemäß Fig. 1;
- Fig. 7 und 8: eine schematische Darstellung eines Reflektors mit einer ringförmigen Aus- sparung und
- Fig. 9 und 10: eine schematische Darstellung eines Reflektors mit einer sektorenförmigen Aussparung.

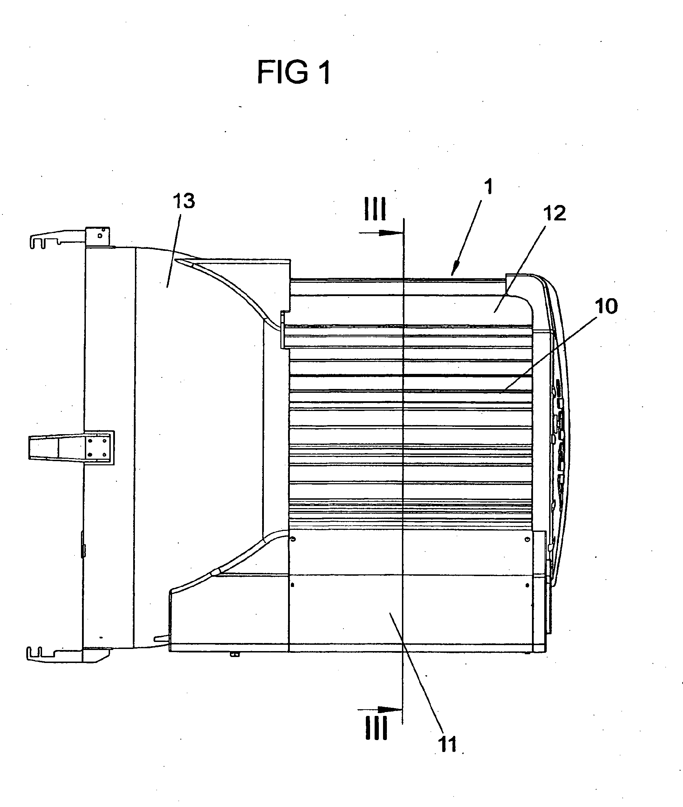

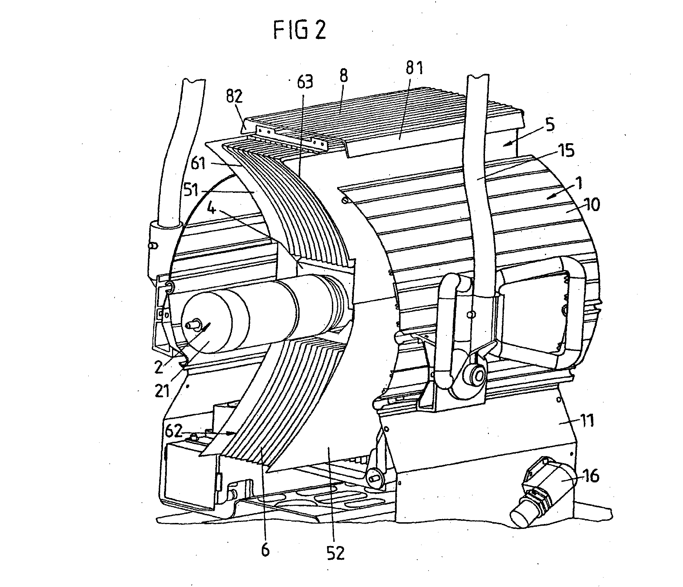

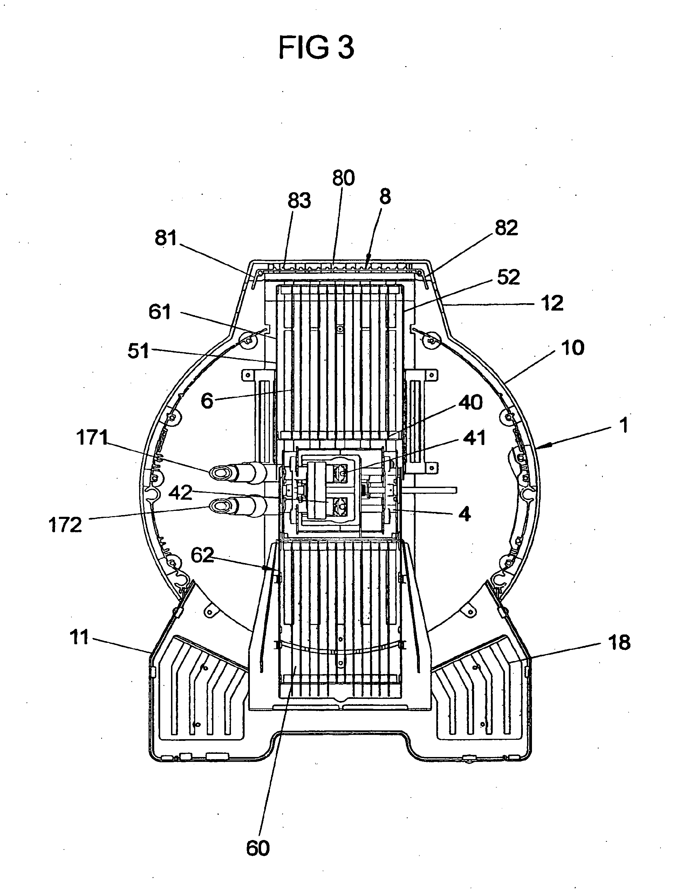

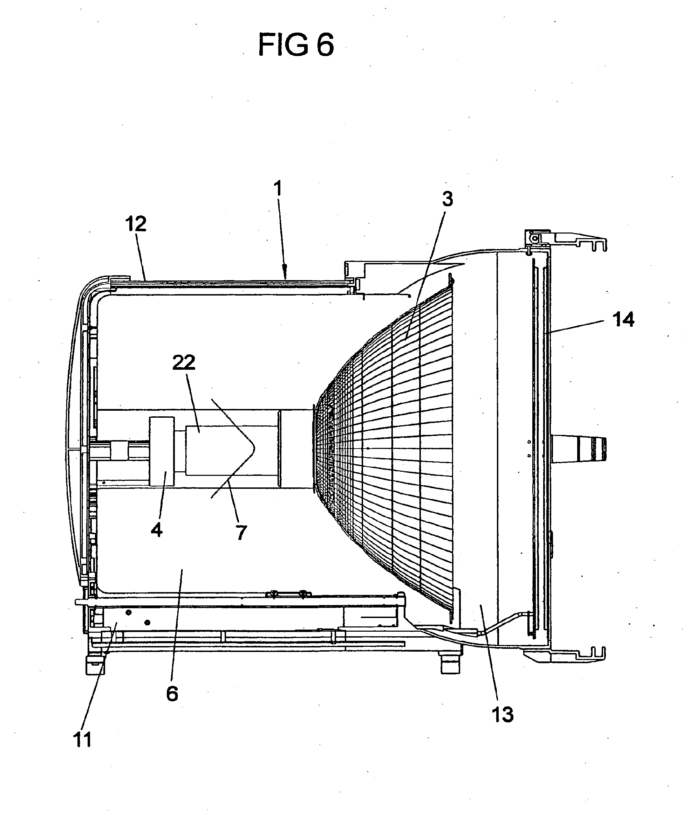

Die in Fig. 1 dargestellte Seitenansicht, die teilweise geschnittene perspektivische Ansicht gemäß Fig. 2, der Querschnitt durch den Scheinwerfer gemäß Fig. 3 und der Längsschnitt durch den Scheinwerfer gemäß Fig. 6 zeigen ein Scheinwerfergehäuse 1 mit einem mittleren, zylinderförmigen Lampengehäuse 10 des Scheinwerfergehäuses 1, einem unteren, polygonalen Funktionsgehäuse 11, einen oberen, trapezförmig vom zylinderförmigen Lampengehäuse 10 abstehenden Teil 12 sowie einem der Kontur des in Fig. 6 dargestellten Reflektors 3 angepassten Frontteil 13.

Wie insbesondere der Seitenansicht gemäß Fig. 1 und der teilweise geschnittenen perspektivischen Ansicht gemäß Fig. 2 zu entnehmen ist, kann bei dem Scheinwerfergehäuse 1 auf die sonst übliche starke Rippung insbesondere des zylinderförmigen Lampengehäuses 10 zur Vergrößerung der Wärme abgebenden Fläche verzichtet werden, da die erfindungsgemäße konvektive Kühlungseinrichtung zur Erzeugung einer Konvektionsströmung die durch die Lampe 2, insbesondere über deren Glasgefäß 21, abgegebene Wärme gezielt zum oberen, trapezförmigen Teil 12 des Scheinwerfergehäuses 1 ableitet und somit die im Innern des Scheinwerfergehäuses 1 befindlichen Bauteile vor einer starken Wärmebelastung schützt.

Die Licht abgebende Frontseite des Scheinwerfergehäuses 1 ist gemäß Fig. 6 durch ein Abdeckelement in Form einer Glasscheibe oder einer Linsenscheibe abgeschlossen. Ein mit dem zylinderförmigen Lampengehäuse 10 verbundener Scheinwerferbügel 15 dient zum Transport sowie zur Stativbefestigung bzw. Aufhängung des Scheinwerfers und kann axial zur Schwerpunktverlagerung am Lampengehäuse 10 verstellt werden.

Im Betrieb des Scheinwerfers erzeugt die brennende Lampe 2 in ihrem Lichtbogen bzw. in ihrem Filament Wärme, die als Wärmestrahlung von den umgebenden Bauteilen, insbesondere vom Reflektor 3, dem Scheinwerfergehäuse 1 und der vorderen Abdeckscheibe oder - linse 14 teilweise absorbiert wird, was zu einer erheblichen Beanspruchung dieser Bauteile führt, die aus wärmebelastbaren Materialien bestehen und entsprechend dimensioniert werden müssen. Darüber hinaus wirken diese Bauteile aber auch als sekundäre Wärmequelle, die ihrerseits Wärme an die Umgebung bzw. an weitere Bauteile insbesondere im Innern des Scheinwerfers abgibt, so dass beispielsweise eine Rippung des Scheinwerfergehäuses 1 vorgesehen werden muss, um eine hinreichend große Wärme abgebende Fläche zur Verfügung zu stellen.

Weiterhin erfolgt eine unmittelbare Wärmeleitung über die Kontaktstecker 41, 42 und Zuleitungen 171, 172 sowie über den Keramikkörper des Lampensockels 22.

Schließlich führt die von der brennenden Lampe 2 abgegebene Wärme dazu, dass die Umgebungsluft der Lampe 2 aufgeheizt wird, die erhitzte Luft entgegen der Gravitationsrichtung nach oben steigt und kühlere Luft von unten nachzieht. Zur Unterstützung dieser Konvektionsströmung sind entsprechend dimensionierte Lufteinlässe an der Unterseite des Scheinwerfers vorzusehen und Luftaustrittsöffnungen an der Oberseite des Scheinwerfers auszubilden, um die erhitzte Luft an die Umgebung abgeben zu können. Dabei ist durch die Formgebung der Lufteintritts- und Luftaustrittsschlitze darauf zu achten, dass kein vagabundierendes Licht aus dem Scheinwerfergehäuse 1 austritt.

Aus den vorstehenden Gründen sind die nach dem Stand der Technik ausgebildeten Scheinwerfergehäuse in Bezug auf die Scheinwerferleistung groß dimensioniert, um die von der brennenden Lampe ausgehenden Wärmelasten aufnehmen zu können und an ihrer Außenfläche stark profiliert, um die Wärme abgebende Fläche hinreichend groß zu gestalten und eine hinreichend große Konvektionsströmung zu gewährleisten, ohne dass Licht aus dem Scheinwerfergehäuse austritt.

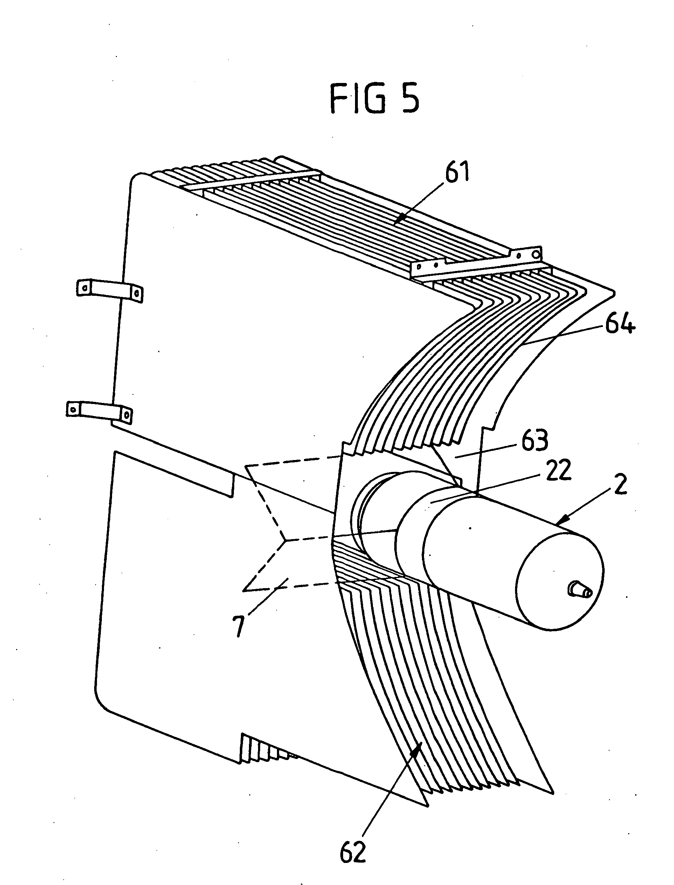

Demgegenüber erfolgt bei dem erfindungsgemäßen Kühlsystem für Scheinwerfer eine gezielte Wärmeleitung der von der brennenden Lampe 2 abgegebenen Wärme, bei der die Wärmestrahlung auf gefährdete Bauteile, wie beispielsweise gemäß Fig. 2 und 3 die Lampenkabel 171, 172 und Kontaktstecker 41, 42, in die Kontaktstifte am Lampensockel 22 (Fig. 5 und 6) der Lampe 2 eingesteckt werden, durch ein Wärmeableitblech 7 abgeschirmt wird, und Bauteile, die nicht vor der Wärmestrahlung geschützt werden können, wie beispielsweise der Reflektor 3, oder zu denen eine unmittelbare Wärmeleitung stattfindet, wie beispielsweise zur Lampenfassung 4, durch eine optimierte Ankopplung an wärmeabführende Bauteile gekühlt werden. Weiterhin wird der Konvektionsprozess durch eine konvektive Kühlungseinrichtung so optimiert, dass eine schnelle, laminare Luftströmung entsteht, die auch dann wirksam ist, wenn der Scheinwerfer beispielsweise geneigt betrieben wird.

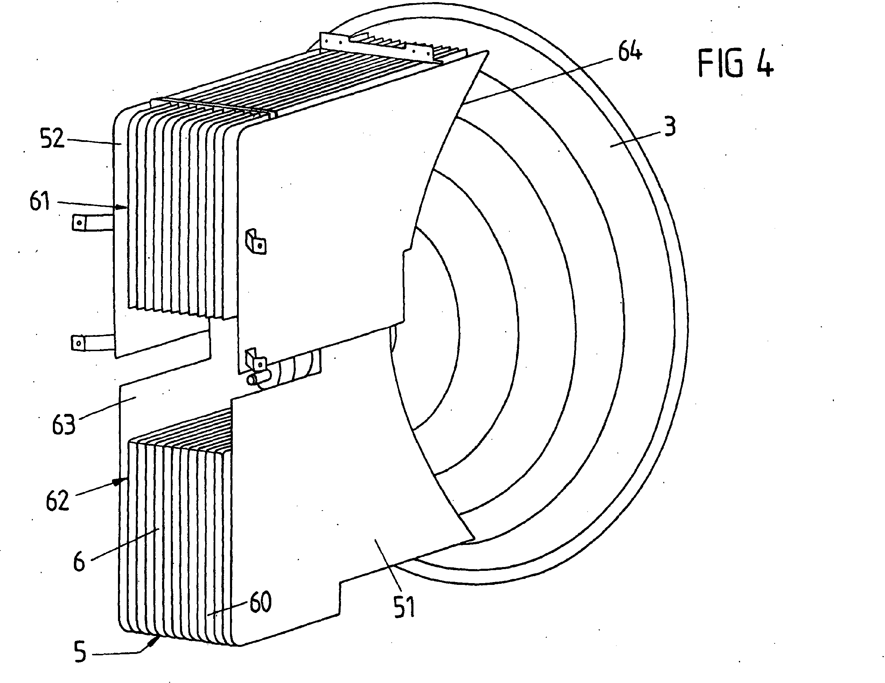

Zu diesem Zweck weist das erfindungsgemäße Kühlsystem gemäß den Fig. 2 bis 6 einen konvektiven Kühlkasten 5 auf, der aus mehreren parallel zueinander angeordneten und in Gravitationsrichtung ausgerichteten, plattenförmigen Kühllamellen 6 sowie zwei Seitenblechen 51, 52 besteht. Die Kühllamellen 6 sind zu einem oberen und unteren Kühllamellenpaket 61, 62 zusammengefasst und schließen dazwischen einen Teil der Lampe 2, insbesondere den Lampensockel 22 bzw. die den Lampensockel 22 aufnehmende Lampenfassung 4 ein. Zwischen den einzelnen Kühllamellen 6 sind Spalte 60 ausgebildet, so dass zwischen jeweils zwei Kühllamellen 6 Kühlschächte ausgebildet sind, über die kühle Luft vom unteren Kühllamellenpaket 62 nachgeführt und erhitzte Luft vom oberen Kühllamellenpaket 61 abgeführt wird.

Die zwischen den Kühllamellen 6 ausgebildeten Kühlschächte werden so dimensioniert, dass eine optimale, schnelle, laminare Luftströmung zur Ableitung der von der Lampe 2 erzeugten Wärme sichergestellt ist. Anhand von Versuchen kann die Abhängigkeit des Wärmestromes pro Schachtbreite in Abhängigkeit von der Breite des Spaltes 60 zwischen den einzelnen Kühllamellen 6 mit unterschiedlichen Schachthöhen als Parameter sowie des Wärmestromes pro Schachtbreite in Abhängigkeit von der Schachthöhe mit unterschiedlichen Spaltdicken als Parameter bei verschiedenen Wandtemperaturen der Kühllamellen 6 bestimmt und als Kurve aufgetragen werden.

Daraus ergibt sich, dass für zu kleine Spaltdicken kaum eine Kühlwirkung zustande kommt, weil wegen des ungünstigen Verhältnisses von Oberfläche zu Volumen die Reibung im Vergleich zu den Auftriebskräften übermäßig groß ist. Bei zunehmender Spaltdicke steigt die Kühlwirkung zunächst steril an, um sich schließlich asymptotisch einem konstanten Wert anzunähern, da Luftpakete, die zu weit weg von der erwärmten Oberfläche liegen, ohnehin nicht erwärmt werden können und deshalb an der Konvektionsströmung nicht beteiligt sind.

Bei der Ermittlung eines optimalen Abstandes der Kühllamellen 6 bei vorgegebenen Abmessungen des Scheinwerfergehäuses 1 ist zu berücksichtigen, dass bei kleiner Spaltdicke zwar mehr Kühllamellen 6 im Scheinwerfergehäuse 1 untergebracht werden können, deren Wirkung aber überproportional abnimmt, während bei zu großem Abstand Bauraum verschenkt wird. Die jeweiligen Optima liegen dort, wo in den vorstehend genannten Kurven die durch den Koordinatenursprung gehenden Tangenten die Kurven berühren.

Unter Berücksichtigung der von der Lampe 2 abgegebenen Wärme, der Umgebungstemperatur und des verfügbaren Bauraumes kann somit eine optimale Dimensionierung der Kühllamellen 6 bzw. der Kühllamellenpakete 61, 62 und damit des konvektiven Kühlkastens 5 ermittelt werden. Daraus ergibt sich beispielsweise bei einer Wandtemperatur von 200 Grad C und einer zwischen den Kühllamellen 6 ausgebildeten Schachthöhe von 0,5 m eine optimale Spaltdicke von 8 mm.

Gemäß den Fig. 2 und 3 wird die von der Lampe 2 abgegebene Wärme über das obere Kühllamellenpaket 61 geführt und im Bereich des oberen, trapezförmigen Teils 12 des Scheinwerfergehäuses 1 abgegeben, in den eine Abdeckplatte 8 mit seitlich nach unten umgebogenen Enden 81, 82 und gerippter Außenfläche 80 angeordnet ist, die eine optimale Wärmeverteilung im oberen, trapezförmigen Teil 12 des Scheinwerfergehäuses 1 bewirkt.

Alternativ zu einer parallelen Anordnung der Kühllamellen 6 können die Kühllamellen auch so gegeneinander geneigt werden, dass sich eine optimale Kühlluftströmung auch dann einstellt, wenn die Kühllamellen 6 asymmetrisch erwärmt werden.

Um die Verwirbelung beim Austritt der erhitzten Luft am oberen Ende der Kühllamellen 6 unter der Abdeckplatte 8 möglichst gering zu halten, können die Kühllamellen 6 des konvektiven Kühlkastens 5 unterschiedlich lang dimensioniert werden, so dass beispielsweise die inneren Kühllamellen 6 länger sind als die äußeren, so dass die aus den oberen Enden der Kühllamellen 6 austretende erhitzte Luft leichter seitlich ausweichen kann.

Aus demselben Grund können die Kühllamellen 6 auch an ihrem oberen Ende nach außen gebogen sein und damit die seitliche Abfuhr der erhitzten Luft unterstützen.

Wie insbesondere der Querschnittsdarstellung gemäß Fig. 3 zu entnehmen ist, erstrecken sich die Kühllamellen 6 über die gesamte Höhe des Scheinwerfers und ermöglichen somit eine optimale konvektive Luftströmung und weitestgehende Abschottung des Kühlsystems vom Inneren des Scheinwerfergehäuses 1. Dadurch wird der verbleibende Innenraum des Scheinwerfergehäuses 1 weitestgehend von der Wärmestrahlung entlastet, so dass ein größerer Spielraum für die Gestaltung des Scheinwerfergehäuses 1 geschaffen wird und die Unterbringung wärmeempfindlicher Bauteile im Inneren des Scheinwerfergehäuses 1 wie Kabel, elektronische Bauteile und dergleichen möglich wird.

Zur optimalen Wärmeübertragung von der Lampenfassung 4 zum oberen und unteren Kühllamellenpaket 61, 62 weist die Lampenfassung 4 gemäß Fig. 3 kammartige Ausnehmungen bzw. Schlitze 40 auf, in die die Kühllamellen 6 mit Spiel eingreifen, so dass keinerlei Wärmespannungen zwischen den Kühllamellen 6 und der Lampenfassung 4 auftreten können. Diese kammförmigen Ausprägungen dienen zur besseren Wärmeübertragung in die Kühllamellen 6, ohne dass zwischen der Lampenfassung 4 und den Kühllamellen 6 bzw. dem konvektiven Kühlkasten 5 Wärmespannungen auftreten und zur Beschädigung der Lampenfassung 4 bzw. der Kühllamellen 6 führen können.

Zum Schutz des Reflektors 3 gemäß den Fig. 2 und 4 bis 6 weisen die in Abstrahlrichtung des Scheinwerfers vorderen Kanten 64 der Kühllamellen 6 eine der Kontur des Reflektors 3 angepasste Form auf. Diese Anpassung der Vorderkanten 64 der Kühllamellen 6 an die Kontur des Reflektors 3 bewirkt einen guten Wärmeübergang vom Reflektor 3 zum konvektiven Kühlkasten 5, wobei die Kühllamellen 6 wahlweise lose an der Außenwand des Reflektors 3 anliegen oder am Reflektor 3 befestigt werden können, um auf diese Weise die Wärmeübertragung vom Reflektor 3 auf die Kühllamellen 6 und damit auf den konvektiven Kühlkasten 5 zu optimieren.

Ein weiterer Vorteil der Anpassung der Vorderkanten 64 der Kühllamellen 6 an die Kontur des Reflektors 3 besteht darin, dass ein guter Wärmeübergang vom Reflektor 3 auf die Kühllamellen 6 und damit auf den konvektiven Kühlkasten 5 auch dann gewährleistet ist, wenn der Scheinwerfer geneigt betrieben wird.

Zusätzlich am Reflektor 3 angebrachte Kühllamellen, die kammartig in die Kühllamellen 6 des konvektiven Kühlkastens eingreifen, stellen einen guten Wärmeübergang vom Reflektor 3 zum konvektiven Kühlkasten 5 auch dann sicher, wenn zur Veränderung der Abstrahlcharakteristik des Scheinwerfers eine Relativbewegung zwischen dem Reflektor 3 und dem Leuchtmittel 2 und damit dem das Leuchtmittel 2 teilweise umgebenden konvektiven Kühlkasten 5 vorgesehen ist.

Zur besseren Abfuhr der auf der Vorderseite des Reflektors 3 im Bereich zwischen dem Reflektor 3 und der vorderen Abdeckscheibe 14 auftretenden Wärme können in der Reflektorfläche Ausnehmungen vorgesehen werden, die in die zwischen den Kühllamellen 6 ausgebildeten Spalte einmünden, so dass ein Wärmestrom aus dem vorderen Bauraum des Scheinwerfers zum konvektiven Kühlkasten 5 erzeugt wird und damit die Belastung sowohl des Reflektors 3 als auch der vorderen Abdeckscheibe 14 bzw. des vorderen Teils 13 des Scheinwerfergehäuses reduziert wird. Diese zusätzliche konvektive Strömung bietet sich insbesondere bei der Verwendung von so genannten "Facetten-Reflektoren" an, deren Licht reflektierende Fläche aus einer Vielzahl einzelner Facetten gebildet wird. Durch das Auslassen einzelner Facetten bzw. von Teilen einzelner Facetten können Öffnungen zur Wärmeabfuhr hergestellt werden, ohne dass dies zu einer merklichen Verschlechterung der vom Scheinwerfer abgegebenen Lichtmenge führt.

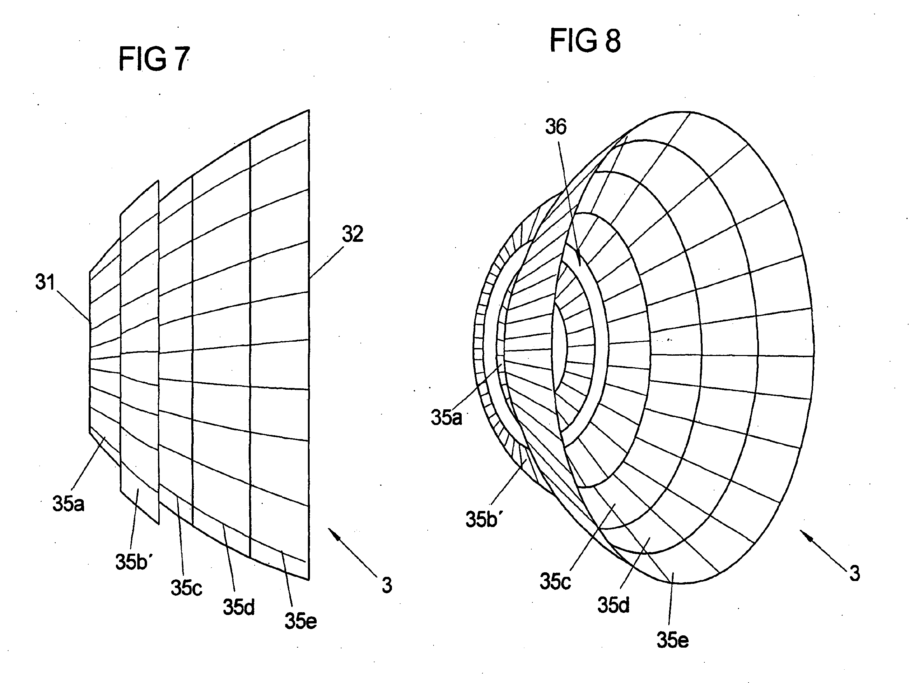

Bei den in den Fig. 7 bis 10 dargestellten Ausführungsformen des Reflektors 3 sind zur Optimierung der Kühlung Aussparungen 36 vorgesehen, bei denen ganze Zeilen oder Spalten von Facetten 33 des Reflektors 3 freigelassen sind.

In den Fig. 7 und 8 ist ein Reflektor dargestellt, bei dem eine ringförmige Aussparung 36 in der. Oberfläche des Reflektors 3 durch einen Ring 35b' von Facetten 33 abgedeckt ist, wobei der Ring 35b' aus mehreren Facettenzeilen ausgebildet ist, einen vergrößerten Durchmesser und eine größere Höhe als der Reflektor 3 im Bereich der Aussparung 36 aufweist und somit von der Reflektorachse aus betrachtet hinter dem eigentlichen Reflektor 3 angeordnet ist. Auf diese Weise ist eine Reflektoranordnung mit einer Aussparung 36 geschaffen, bei der beispielsweise ein Kühlluftstrom in das Innere des Reflektors 3 hinein und durch den Reflektor 3 hindurchdringen kann und gleichzeitig das optische Verhalten des Reflektors 3 nicht beeinträchtigt ist.

Der zur Abdeckung der Aussparung 36 dienende Ring 35b' ist dabei radial vom eigentlichen Reflektor 3 beabstandet, erstreckt sich im Wesentlichen parallel zur ursprünglichen Oberfläche des Reflektors 3 im Bereich der Aussparung 36 und überlappt in Richtung der Reflektorachse die jeweils benachbarten Ringe 35a, 35c, um somit von der Reflektorachse, insbesondere von den möglichen Lampenpositionen auf der Reflektorachse aus betrachtet die Aussparung 36 vollständig zu überdecken. Auf diese Weise können die Verluste, die durch aus der Aussparung 36 im Reflektor 3 heraus gestreutes Licht entstehen, vermindert werden, so dass der Wirkungsgrad und die erzeugte Lichtverteilung des in der beschriebenen Weise mit Aussparungen 36 versehenen Reflektors 3 nicht wesentlich beeinflusst , die Kühlwirkung aber gegenüber einer Herausnahme einzelner Facetten 33 aber deutlich erhöht ist.

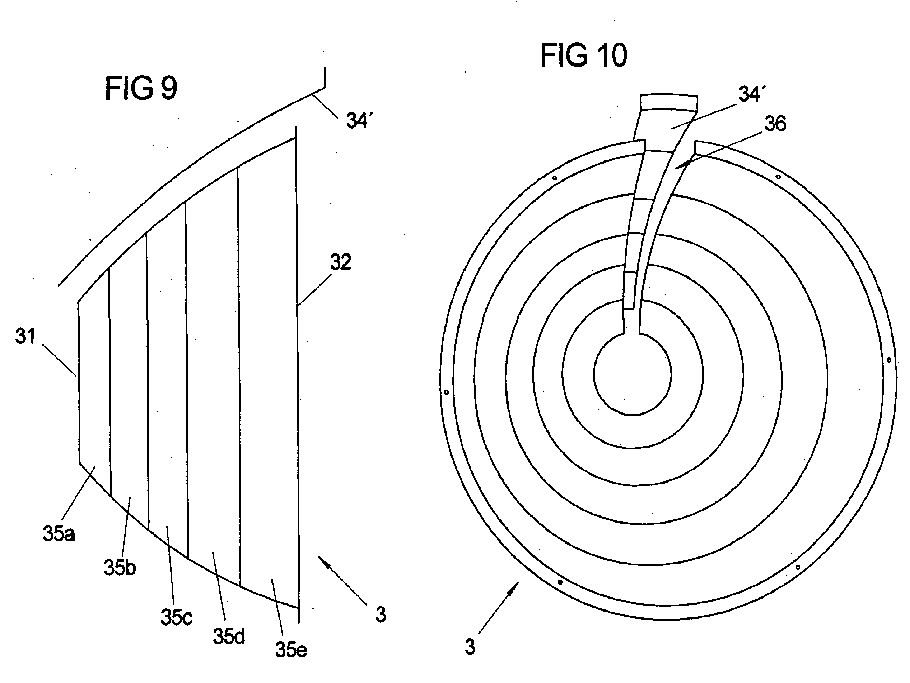

In dem in den Fig. 9 und 10 dargestellten Reflektor 3 ist eine Aussparung 36 für einen Kühlstrom geschaffen, indem ein sektorenförmiger Bereich von Facetten 33 des Reflektors 3 freigelassen und durch einen radial beabstandeten, von der Reflektorachse aus gesehen hinter dem eigentlichen Reflektor 3 angeordneten Sektor 34' abgedeckt ist. Der Sektor 34' ist durch mehrere Spalten von Facetten 33 ausgebildet und erstreckt sich im Wesentlichen parallel zur ursprünglichen Oberfläche des Reflektors 3 im Bereich seiner Aussparung 36. Aus der Fig. 9 ist ersichtlich, dass der Sektor 34' zum einen in seiner Höhe entlang der Reflektorachse und in radialer Richtung senkrecht zur Reflektorachse vergrößert ist und zum anderen von der Reflektorachse aus betrachtet nach außen, also in radialer Richtung relativ zum eigentlichen Reflektor 3 versetzt angeordnet ist. Der Sektor 34' kann dabei zusätzlich entlang des Umfangs des Reflektors 3 senkrecht zur Reflektorachse so ausgebildet sein, dass er in Umfangsrichtung die dem Sektor 34' benachbarten Sektoren überlappt.

Ein Reflektor 3 gemäß den Fig. 7 bis 10 weist somit eine Aussparung 36 auf, mittels derer eine effektive Kühlung des Reflektors 3 und der Lampe 2, die im Innenraum des Reflektors 3 angeordnet und von diesem eingeschlossen ist, möglich ist, wobei durch die Ausbildung und die räumliche Anordnung des einen Abschnitt zur Abdeckung der Aussparung 36 ausbildenden Sektors 34' oder Rings 35b' die Lichtleistung und Lichtverteilung des Scheinwerfers nicht wesentlich beeinträchtigt ist, so dass der Scheinwerfer einen vergleichbaren Wirkungsgrad wie eine Anordnung mit einem geschlossen Reflektor 3 aufweist.

Es sei hierbei darauf hingewiesen, dass die Fig. 7 bis 10 nicht maßstabsgetreu gezeichnet sind und insbesondere der radiale Abstand zwischen dem zur Abdeckung dienenden Abschnitt 34', 35b' und dem Reflektor 3 kleiner als dargestellt sein kann.

Bei den Ausführungsformen des Reflektors 3 gemäß den Fig. 7 bis 10 kann dabei durch eine veränderte Ausbildung der Facetten 33 hinsichtlich ihrer Wölbung und ihrer Anordnung in dem Ring 35b' oder dem Sektor 34' bewirkt werden, dass die durch den mit der Aussparung versehenen Reflektor 3 erzeugte Lichtverteilung vergleichbar ist mit der Lichtverteilung bei einem geschlossenen Reflektor 3.

Darüber hinaus ist es denkbar, nicht nur eine Aussparung durch die Herausnahme ganzer Zeilen oder Spalten von Facetten 33 des Reflektors 3 zu schaffen, sondern durch das Weglassen, Versetzen und/oder Skalieren mehrerer Ringe 35b' und/oder Sektoren 34' von Facetten 33 mehrere Aussparungen im Reflektor 3 herzustellen, um eine weitere Verbesserung der Kühlung zu erreichen.

Zusätzlich zu der vorstehend beschriebenen konvektiven Kühlungseinrichtung weist das erfindungsgemäße Kühlsystem im unteren, polygonalalen Funktionsgehäuse 11 angeordnete Belüftungsschächte 18 gemäß Fig. 3 auf, über die Kühlluft in das zwischen dem konvektiven Kühlkasten 5 und dem zylinderförmigen Lampengehäuse 10 ausgebildete Innere des Scheinwerfergehäuses 1 geleitet wird. Diese Kühlluft führt die von den Seitenplatten 51, 52 des konvektiven Kühlkastens 5 abgegebene Wärme durch Konvektionsströmung zum oberen, trapezförmigen Teil 12 des Scheinwerfergehäuses 1 und verhindert somit einen Wärmestau in diesem Teil des Gehäuseinneren. Die Kühlluft gelangt dabei über außerhalb des Scheinwerfergehäuses 1 angeordnete Lufteintrittsöffnungen der Belüftungsschächte 18 zu in das Innere des Scheinwerfergehäuses 1 mündende Luftaustrittsöffnungen sowie über den konvektiven Kühlkasten 5 in den oberen, trapezförmigen Teil 12 des Scheinwerfergehäuses 1.

Der perspektivischen Darstellung gemäß Fig. 5 ist zu entnehmen, wie die Lampe 22 vom konvektiven Kühlkasten 5 in dem zwischen dem oberen Kühllamellenpaket 61 und dem unteren Kühllamellenpaket 62 ausgebildeten Zwischenraum 63 eingeschlossen wird und in diesem Zwischenraum 63 in der optischen Achse des Scheinwerfers, das heißt in axialer Richtung, verschiebbar gelagert ist. Unabhängig von der Stellung der Lampe 2 wird zumindest ein Teil der Lampe 2, insbesondere der Lampensockel 22 von dem konvektiven Kühlkasten 5 eingeschlossen, so dass eine optimale Wärmeübertragung und damit schnelle, laminare Luftströmung zur Abfuhr der von der Lampe 2 abgegebenen Wärme sichergestellt ist.

Als weiteres Merkmal des erfindungsgemäßen Kühlsystems für Scheinwerfer ist gemäß den Fig. 5 und 6 ein V-förmiges Wärmeableitblech 7 mit dem Lampensockel 22 verbunden, das die gegenüber Erhitzung besonders empfindlichen Bauteile des Scheinwerfers wie die im Innern des Scheinwerfergehäuses 1 geführten Lampenkabel 171, 172 sowie die Kontaktstecker 41, 42 der Lampenfassung 4 vor einer zu starken Erwärmung schützt, indem das Wärmeableitblech 7 diese Bauteile vor der Wärmestrahlung abschirmt und die über den Lampensockel 22 geleitete Wärme nach außen, insbesondere zum oberen und unteren Kühllamellenpaket 61, 62 des konvektiven Kühlkastens 5 ableitet.

Die Verbindung des Wärmeableitblechs 7 mit dem Lampensockel 22 erfolgt vorzugsweise durch Aufstecken des als Aufsteckteil ausgebildeten Wärmeableitblechs 7 auf den Lampensockel 22 bzw. den Lampenhals, wobei das Wärmeableitblech 7 so ausgebildet ist, dass es möglichst formschlüssig am Lampenhals anliegt, um den Strom der vom Leuchtmittel 2 abgegebenen heißen Luft entgegen der Abstrahlrichtung des Scheinwerfers, das heißt nach hinten, abzuschotten.

Alternativ zu der Verbindung des Wärmeableitblechs 7 mit dem Lampensockel 22 bzw. dem Lampenhals kann das Wärmeableitblech 7 auch mit einer gesonderten Lampenklemmung verbunden werden, die zur mechanischen Entlastung der Kontaktstifte des Leuchtmittels 2 bzw. des Kontaktsteckers des Scheinwerfers vorgesehen ist und den Lampensockel 22 umfasst und mechanisch sichert.

Das vorstehend beschriebene Ausführungsbeispiel wurde anhand einer axial ausgerichteten und in der optischen Achse des Scheinwerfers verstellbaren Lampe 2 erläutert, ist aber nicht auf diese Form der Anordnung einer Lampe oder eines Brenners beschränkt. So kann das erfindungsgemäße Kühlsystem selbstverständlich auch in einem sphärischen optischen System eingesetzt werden, bei dem die Lampe senkrecht vor einem Reflektor steht oder in dem doppelt gesockelte Lampen eingesetzt werden, die quer zum Reflektor eingebaut werden und ggf. in einer Aussparung des Reflektors liegen. Auch bei diesen Varianten kann die vorstehend beschriebene konvektive Kühlungseinrichtung ebenso wie das Wärmeableitblech vorteilhaft eingesetzt werden.

### Bezugszeichenliste

- 1: Scheinwerfergehäuse
- 2: Leuchtmittel (Lampe oder Brenner)
- 3: Reflektor
- 4: Leuchtmittelfassung (Lampenfassung)
- 5: Konvektiver Kühlkasten
- 6: Kühllamellen
- 7: Wärmeableitblech
- 8: Abdeckplatte
- 10: Lampengehäuse
- 11: Funktionsgehäuse
- 12: oberer, trapezförmiger Teil des Scheinwerfergehäuses
- 13: Vorderteil des Scheinwerfergehäuses
- 14: Abdeckscheibe oder -linse
- 15: Scheinwerferbügel
- 18: Belüftungsschächte
- 21: Glasgefäß
- 22: Leuchtmittelsockel (Lampensockel)
- 31: Erste Öffnung des Reflektors
- 32: Zweite Öffnung des Reflektors
- 33: Facette
- 34, 34': Sektor
- 35a-e, 35b': Ring
- 36: Aussparung
- 51, 52: Seitenbleche
- 60: Spalte
- 61: Oberes Kühllamellenpaket
- 62: Unteres Kühllamellenpaket
- 63: Zwischenraum
- 64: Vorderkanten der Kühllamellen
- 80: gerippte Außenfläche der Abdeckplatte
- 81, 82: nach unten umgebogenen Enden der gerippten Außenfläche
- 171, 172: Versorgungsleitungen

## Patentansprüche

1. Scheinwerfer mit einem Scheinwerfergehäuse (1), in dem eine Leuchtmittelfassung (4) zur Aufnahme eines Leuchtmittels (2), ein Reflektor (3), der die vom Leuchtmittel (2) abgegebenen Lichtstrahlen zu einer Lichtaustrittsöffnung des Scheinwerfergehäuses (1) reflektiert, und eine das Leuchtmittel (2) zumindest teilweise einschließende konvektive Kühlungseinrichtung (5, 51, 52; 6, 60-64) angeordnet sind, die zur Ableitung der vom Leuchtmittel (2) abgegebenen Wärme eine Konvektionsströmung erzeugt und mehrere zu Kühllamellenpaketen (61, 62) zusammengefasste Kühllamellen (6) aufweist.
**dadurch gekennzeichnet.**
**dass** die Längsachse des Leuchtmittel (2) in der optischen Achse des Scheinwerfers angeordnet ist, dass die Kühllamellen (6) parallel oder zueinander geneigt zu beiden Seiten einer ersten Ebene verlaufen, die senkrecht zu einer durch zwei seitlich des Scheinwerfergehäuses (1) angeordnete Drehlager verlaufenden Neigungsachse des Scheinwerfers ausgerichtet ist und die Kühllamellenpakete (61, 62) und das Leuchtmittel (2) gleichzeitig schneidet und dass die Kühllamellenpakete (61, 62) oberhalb und unterhalb einer zweiten Ebene angeordnet sind, die senkrecht zur ersten Ebene entlang der optischen Achse des Scheinwerfers verläuft.

2. Scheinwerfer nach Anspruch 1, **dadurch gekennzeichnet, dass** sich die Kühllamellen (6) im Wesentlichen über die gesamte Höhe des Scheinwerfers erstrecken.

3. Scheinwerfer nach Anspruch 1 oder 2, **dadurch gekennzeichnet, dass** die Kühllamellenpakete (61, 62) durch beidseitige Seitenbleche (51, 52) zur Bildung eines konvektiven Kühlkastens (5) begrenzt sind.

4. Scheinwerfer nach mindestens einem der vorangehenden Ansprüche, **dadurch gekennzeichnet, dass** die Kühllamellen (6) bei asymmetrischer Erwärmung derart gegeneinander geneigt sind, dass in allen zwischen den Kühllamellen (6) ausgebildeten Spalten (60) eine im Wesentlichen laminare Kühlluftströmung erhalten bleibt.

5. Scheinwerfer nach mindestens einem der vorangehenden Ansprüche, **dadurch gekennzeichnet, dass** die Spaltdicke der zwischen den Kühllamellen (6) ausgebildeten Spalten (60) zumindest in Abhängigkeit von der Wandtemperatur der Kühllamellen (6) und der Höhe der Kühllamellenpakete (61, 62) bestimmt wird.

6. Scheinwerfer nach mindestens einem der vorangehenden Ansprüche, **dadurch gekennzeichnet, dass** die Breite des konvektiven Kühlkastens (5) im Wesentlichen an die Breite des Leuchtmittels (2) angepasst ist.

7. Scheinwerfer nach mindestens einem der vorangehenden Ansprüche, **dadurch gekennzeichnet, dass** die konvektive Kühlungseinrichtung (5, 51, 52; 6, 60- 64) eine im Wesentlichen schnelle, laminare Kühlluftströmung erzeugt.

8. Scheinwerfer nach mindestens einem der vorangehenden Ansprüche, **dadurch gekennzeichnet, dass** die Kühllamellen (6) zumindest teilweise unterschiedlich lang ausgebildet sind.

9. Scheinwerfer nach Anspruch 8, **dadurch gekennzeichnet, dass** die mittig angeordneten Kühllamellen (6) länger sind als die äußeren Kühllamellen (6).

10. Scheinwerfer nach mindestens einem der vorangehenden Ansprüche, **dadurch gekennzeichnet, dass** die vorzugsweise oberen Enden der Kühllamellen (6) zu den Seiten der mehreren Kühllamellen (6) gebogen sind.

11. Scheinwerfer nach mindestens einem der vorangehenden Ansprüche, **dadurch gekennzeichnet, dass** das obere Kühllamellenpaket (61) oder der konvektive Kühlkasten (5) aus dem oberen Teil (12) des Scheinwerfergehäuses (1) herausgeführt und durch eine Abdeckplatte (8) abgedeckt ist.

12. Scheinwerfer nach Anspruch 11, **dadurch gekennzeichnet, dass** die Abdeckplatte (8) zum Scheinwerfergehäuse (1) abgewinkelte Enden (81, 82) aufweist.

13. Scheinwerfer nach mindestens einem der vorangehenden Ansprüche, **dadurch gekennzeichnet, dass** der konvektive Kühlkasten (5) in dem zwischen dem oberen und unteren Kühllamellenpaket (61, 62) ausgebildeten Zwischenraum (63) die Leuchtmittelfassung (4) aufnimmt.

14. Scheinwerfer nach Anspruch 13, **dadurch gekennzeichnet, dass** die Leuchtmittelfassung (4) obere und untere kammförmige Ausprägungen oder Einschnitte (40) aufweist, in die zumindest ein Teil der Kühllamellen (6) mit Bewegungsspielraum eingreift.

15. Scheinwerfer nach mindestens einem der vorangehenden Ansprüche, **dadurch gekennzeichnet, dass** die in Abstrahlrichtung des Scheinwerfers vorderen Kanten (64) der Kühllamellen (6) der Form des Reflektors (3) angepasst sind und den Reflektor (3) im Wesentlichen umfassen.

16. Scheinwerfer nach Anspruch 15, **dadurch gekennzeichnet, dass** die Vorderkanten (64) der Kühllamellen (6) am Reflektor (3) anliegen.

17. Scheinwerfer nach Anspruch 15 oder 16, **dadurch gekennzeichnet, dass** die Kühllamellen (6) am Reflektor (3) befestigt sind.

18. Scheinwerfer nach mindestens einem der vorangehenden Ansprüche, **dadurch gekennzeichnet, dass** die Rückseite des Reflektors (3) mit Kühllamellen versehen ist, die kammförmig in die zwischen den Kühllamellen (6) des konvektiven Kühlkastens (5) ausgebildeten Spalte (60) eingreifen.

19. Scheinwerfer nach mindestens einem der vorangehenden Ansprüche, **dadurch gekennzeichnet, dass** der Reflektor (3) Lüftungsöffnungen aufweist, die in die zwischen den Kühllamellen (6) ausgebildeten Spalte (60) einmünden.

20. Scheinwerfer nach mindestens einem der vorangehenden Ansprüche mit einem Facetten-Reflektor mit einer Vielzahl von ringförmig um die Reflektormitte in Zeilen und Spalten angeordnete und eine reflektierende Fläche ausbildenden Facetten, **dadurch gekennzeichnet, dass** ein eine oder mehrere Zeilen von Facetten (33) umfassender ringförmiger Bereich des Reflektors (3) freigelassen ist und so eine Aussparung (36) im Bereich des Reflektors (3) geschaffen ist, durch die eine Kühlluftströmung durch den Reflektor (3) strömen kann.

21. Scheinwerfer mindestens einem der vorangehenden Ansprüche mit einem Facetten-Reflektor mit einer Vielzahl von ringförmig um die Reflektormitte in Zeilen und Spalten angeordnete und eine reflektierende Fläche ausbildenden Facetten, **dadurch gekennzeichnet, dass** ein eine oder mehrere Spalten (34) von Facetten (33) umfassender Bereich des Reflektors (3) freigelassen ist und so eine Aussparung (36) in der Oberfläche des Reflektors (3) vorgesehen ist, durch die eine Kühlluftströmung durch den Reflektor (3) strömen kann.

22. Scheinwerfer nach einem der Ansprüche 20 oder 21, **dadurch gekennzeichnet, dass** die Aussparung (36) durch einen aus reflektierenden Facetten (33) gebildeten Abschnitt (34', 35b'), der radial von der Oberfläche des Reflektors (3) beabstandet ist und sich in etwa parallel zur Oberfläche des eigentlichen Reflektors (3) erstreckt, abgedeckt ist.

23. Scheinwerfer nach Anspruch 22, **dadurch gekennzeichnet, dass** der zur Abdeckung der Aussparung (36) gebildete Abschnitt aus Facetten (33) gebildet ist, die in ihrer Oberflächenformgebung und Anordnung so beschaffen sind, dass der Reflektor (3) die gewünschte Lichtverteilung erzeugt.

24. Scheinwerfer nach mindestens einem der vorangehenden Ansprüche, **dadurch gekennzeichnet, dass** zwischen dem Glasgefäß (21) und den Kontaktstiften des Leuchtmittels (2) ein Wärmeableitblech (7) angeordnet und auf die Kühllamellenpakete (61, 62) ausgerichtet ist.

25. Scheinwerfer nach Anspruch 24, **dadurch gekennzeichnet, dass** das Wärmeableitblech (7) V-, U- oder S-förmig ausgebildet ist.

26. Scheinwerfer nach Anspruch 24 oder 25, **dadurch gekennzeichnet, dass** das Wärmeableitblech (7) mit dem Leuchtmittelsockel (22) verbunden ist.

27. Scheinwerfer nach Anspruch 26, **dadurch gekennzeichnet, dass** das Wärmeableitblech (7) auf den Leuchtmittelsockel (22) aufgesteckt ist.

28. Scheinwerfer nach Anspruch 24 oder 25, **dadurch gekennzeichnet, dass** das Wärmeableitblech (7) mit der Leuchtmittelfassung (4), insbesondere mit der Lampenklemmung für das Leuchtmittel, verbunden ist.

29. Scheinwerfer nach mindestens einem der vorangehenden Ansprüche, **dadurch gekennzeichnet, dass** das eine im Wesentlichen zylinderförmige Kontur aufweisende Leuchtmittel (2) in axiale Richtung des Scheinwerfers ausgerichtet und in eine zentrale Öffnung des Reflektors (3) eingesetzt ist.

30. Scheinwerfer nach Anspruch 29, **dadurch gekennzeichnet, dass** das Leuchtmittel (2) und der Reflektor (3) in axialer Richtung gegeneinander verschiebbar sind.

## Claims

1. A projector with a projector housing (1) in which there are arranged an illuminant holder (4) for holding an illuminant (2), a reflector (3) that reflects the light beams emitted by the illuminant (2) to a light exit opening of the projector housing (1), and a convective cooling device (5, 51, 52; 6, 60-64) at least partially enclosing the illuminant (2), that produces a convection flow for dissipating the heat output by the illuminant (2) and has a number of cooling fins (6) combined into cooling fin packs (61, 62),
**characterized in**
**that** the longitudinal axis of the illuminant (2) is arranged in the optical axis of the projector, that the cooling fins (6) continue parallel or inclined to one another on both sides of a first plane, which is aligned lateral to an axis of inclination of the projector continuing through two pivot bearings arranged sidewise to the projector housing (1) and which crosses simultaneously the cooling fin packs (61, 62) and the illuminant (2), and that the cooling fin packs (61, 62) are arranged above and below a second plane, which continues vertical to the first plane along the optical axis of the projector.

2. The projector as claimed in claim 1, **characterized in that** the cooling fins (6) extend substantially over the entire height of the projector.

3. The projector as claimed in claim 1 or 2, **characterized in that** the cooling fin packs (61, 62) are delimited by bilateral side plates (51, 52) to form a convective cooling box (5).

4. A cooling system as claimed in at least one of the preceding claims, **characterized in that** the cooling fins (6) are inclined to one another given asymmetric heating in such a way that a substantially laminar cooling air flow is maintained in all gaps (60) formed between the cooling fins (6).

5. The projector as claimed in at least one of the preceding claims, **characterized in that** the gap thickness of the gaps (60) formed between the cooling fins (6) is determined at least as a function of the wall temperature of the cooling fins (6) and the height of the cooling fin packs (61, 62).

6. The projector as claimed in at least one of the preceding claims, **characterized in that** the width of the convective cooling box (5) is substantially adapted to the width of the illuminant (2).

7. The cooling system as claimed in at least one of the preceding claims, **characterized in that** the convective cooling device (5, 51, 52; 6, 60-64) produces a substantially fast, laminar cooling air flow.

8. The cooling system as claimed in at least one of the preceding claims, **characterized in that** the cooling fins (6) are designed at least partially with different lengths.

9. The cooling system as claimed in claim 8, **characterized in that** the centrally arranged cooling fins (6) are longer than the outer cooling fins (6).

10. The cooling system as claimed in at least one of the preceding claims, **characterized in that** the preferably upper ends of the cooling fins (6) are bent to the sides of the number of cooling fins (6).

11. The cooling system as claimed in at least one of the preceding claims, **characterized in that** the upper cooling fin pack (61) or the convective cooling box (5) is guided out of the upper part (12) of the projector housing (1) and covered by a cover plate (8).

12. The cooling system as claimed in claim 11, **characterized in that** the cover plate (8) has ends (81, 82) angled away toward the projector housing (1).

13. The cooling system as claimed in at least one of the preceding claims, **characterized in that** the convective cooling box (5) accommodates the illuminant holder (4) in the interspace (63) formed between the upper and lower cooling fin packs (61, 62).

14. The cooling system as claimed in claim 13, **characterized in that** the illuminant holder (4) has upper and lower comb-shaped configurations or slots (40) in which at least a portion of the cooling fins (6) engages with freedom of movement.

15. The cooling system as claimed in at least one of the preceding claims, **characterized in that** the front edges (64) of the cooling fins (6) in the radiating direction of the projector are adapted to the shape of the reflector (3), and substantially cover the reflector (3).

16. The cooling system as claimed in claim 15, **characterized in that** the front edges (64) of the cooling fins (6) bear against the reflector (3).

17. The cooling system as claimed in claim 15 or 16, **characterized in that** the cooling fins (6) are fastened on the reflector (3).

18. The cooling system as claimed in at least one of the preceding claims, **characterized in that** the rear side of the reflector (3) is provided with cooling fins that engage in the shape of a comb in the gaps (60) formed between the cooling fins (6) of the convective cooling box (5).

19. The cooling system as claimed in at least one of the preceding claims, **characterized in that** the reflector (3) has ventilation openings that open into the gaps (60) formed between the cooling fins (6).

20. The reflector as claimed in at least one of the preceding claims with a facet reflector having a multiplicity of facets arranged annularly in rows and columns around the center of the reflector and forming a reflecting surface, **characterized in that** an annular region, comprising one or more rows of facets (33), of the reflector (3) is left free so as to provide a cutout (36) in the region of the reflector (3) through which a cooling air flow can flow through the reflector (3).

21. The projector as claimed in at least one of the preceding claims with a facet reflector having a multiplicity of facets arranged annularly in rows and columns around the center of the reflector and forming a reflecting surface, **characterized in that** a region, comprising one or more columns (34) of facets (33), of the reflector (3) is left free so as to provide a cutout (36) in the surface of the reflector (3) through which a cooling air flow can flow through the reflector (3).

22. The projector as claimed in one of claims 20 and 21, **characterized in that** the cutout (36) is covered by a section (34', 35b') that is formed from reflecting facets (33), is spaced apart radially from the surface of the reflector (3), and extends approximately parallel to the surface of the actual reflector (3).

23. The projector as claimed in claim 22, **characterized in that** the section formed for covering the cutout (36) is formed from facets (33) that are fashioned as regards their surface shaping and arrangement such that the reflector (3) produces the desired light distribution.

24. The cooling system as claimed in at least one of the preceding claims, **characterized in that** a heat dissipating plate (7) is arranged between the glass vessel (21) and the contact pins of the illuminant (2) and is aligned with the cooling fin packs (61, 62).

25. The cooling system as claimed in claim 24, **characterized in that** the heat dissipating plate (7) is of V-, U- or S-shaped design.

26. The cooling system as claimed in claim 24 or 25, **characterized in that** the heat dissipating plate (7) is connected to the illuminant base (22).

27. The cooling system as claimed in claim 26, **characterized in that** the heat dissipating plate (7) is plugged onto the illuminant base (22).

28. The cooling system as claimed in claim 24 or 25, **characterized in that** the heat dissipating plate (7) is connected to the illuminant holder (4), in particular to the lamp clamp for the illuminant.

29. The cooling system as claimed in at least one of the preceding claims, **characterized in that** the illuminant (2) having a substantially cylindrical contour is aligned in the axial direction of the projector and inserted into a central opening of the reflector (3).

30. The cooling system as claimed in claim 29, **characterized in that** the illuminant (2) and the reflector (3) can be displaced in an axial direction relative to one another.

## Revendications

1. Projecteur, comprenant un boîtier de projecteur (1) dans lequel sont agencés une douille (4) pour la réception d'un moyen d'éclairage (2), un réflecteur (3) qui réfléchit les rayons lumineux émis par le moyen d'éclairage (2) en direction d'une ouverture de sortie de lumière du boîtier de projecteur (1), et un moyen de refroidissement (5, 51, 52 ; 6, 60-64) par convection qui enferme au moins partiellement le moyen d'éclairage (2), ce moyen de refroidissement engendrant un courant de convection pour l'évacuation de la chaleur émise par le moyen d'éclairage (2) et comprenant plusieurs lamelles de refroidissement (6) regroupées en paquets de lamelles de refroidissement (61, 62), **caractérisé en ce que**
l'axe longitudinal du moyen d'éclairage (2) est agencé sur l'axe optique du projecteur, **en ce que** les lamelles de refroidissement (6) s'étendent orientées parallèlement ou inclinées les unes par rapport aux autres des deux côtés d'un premier plan qui est orienté perpendiculairement à un axe d'inclinaison, passant par deux paliers de rotation agencés latéralement par rapport au boîtier de projecteur (1), du projecteur, et qui recoupe simultanément les paquets de lamelles de refroidissement (61, 62) et le moyen d'éclairage (2), et **en ce que** les paquets de lamelles de refroidissement (61, 62) sont agencés au-dessus et au-dessous d'un second plan qui s'étend perpendiculairement au premier plan le long de l'axe optique du projecteur.

2. Projecteur selon la revendication 1, **caractérisé en ce que** les lamelles de refroidissement (6) s'étendent essentiellement sur la totalité de la hauteur du projecteur.

3. Projecteur selon la revendication 1 ou 2, **caractérisé en ce que** les paquets de lamelles de refroidissement (61, 62) sont limités par des tôles latérales (51, 52) sur les deux côtés pour constituer un caisson de refroidissement (5) par convection.

4. Projecteur selon l'une au moins des revendications précédentes, **caractérisé en ce que** les lamelles de refroidissement (6) sont inclinées, lors d'un échauffement asymétrique, les unes par rapport aux autres de telle façon que dans tous les intervalles (60) formés entre les lamelles de refroidissement (6), un écoulement d'air de refroidissement essentiellement laminaire reste maintenu.

5. Projecteur selon l'une au moins des revendications précédentes, **caractérisé en ce que** l'épaisseur des intervalles (60) formés entre les lamelles de refroidissement (6) est déterminé au moins en fonction de la température de parois des lamelles de refroidissement (6) et de la hauteur des paquets de lamelles de refroidissement (61, 62).

6. Projecteur selon l'une au moins des revendications précédentes, **caractérisé en ce que** la largeur du caisson de refroidissement (5) par convection est essentiellement adaptée à la largeur du moyen d'éclairage (2).

7. Projecteur selon l'une au moins des revendications précédentes, **caractérisé en ce que** le moyen de refroidissement (5, 51, 52 ; 6, 60-64) engendre un écoulement d'air de refroidissement laminaire sensiblement rapide.

8. Projecteur selon l'une au moins des revendications précédentes, **caractérisé en ce que** les lamelles de refroidissement (6) sont réalisées au moins partiellement avec des longueurs différentes.

9. Projecteur selon la revendication 8, **caractérisé en ce que** les lamelles de refroidissement (6) agencées au milieu sont plus longues que les lamelles de refroidissement extérieures (10).

10. Projecteur selon l'une au moins des revendications précédentes, **caractérisé en ce que** les extrémités, de préférence supérieures, des lamelles de refroidissement (6) sont cintrées vers les côtés des plusieurs lamelles de refroidissement (6).

11. Projecteur selon l'une au moins des revendications précédentes, **caractérisé en ce que** le paquet de lamelles de refroidissement (61) supérieur ou bien le caisson de refroidissement (5) par convection est sorti hors de la partie supérieure (12) du boîtier de projecteur (1) et est recouvert par une plaque de couverture (8).

12. Projecteur selon la revendication 11, **caractérisé en ce que** la plaque de couverture (8) comporte des extrémités (81, 82) coudées vers le boîtier de projecteur (1).

13. Projecteur selon l'une au moins des revendications précédentes, **caractérisé en ce que** le caisson de refroidissement (5) par convection reçoit la douille (4) pour le moyen d'éclairage dans l'espace intermédiaire (63) formé entre le paquet de lamelles de refroidissement supérieur et le paquet de lamelles de refroidissement inférieur (61, 62).

14. Projecteur selon la revendication 13, **caractérisé en ce que** la douille (4) pour le moyen d'éclairage comporte des reliefs ou des découpes (40) supérieures et inférieures à la manière d'un peigne, dans lesquelles s'engagent au moins une partie des lamelles de refroidissement (6) avec un jeu de mobilité.

15. Projecteur selon l'une au moins des revendications précédentes, **caractérisé en ce que** les arêtes (64), antérieures dans la direction de rayonnement du projecteur, des lamelles de refroidissement (6) sont adaptées à la forme de réflecteur (3) et enferment sensiblement le réflecteur (3).

16. Projecteur selon la revendication de 15, **caractérisé en ce que** les arêtes antérieures (63) des lamelles de refroidissement (6) touchent le réflecteur (3).

17. Projecteur selon la revendication de 15 ou 16, **caractérisé en ce que** les lamelles de refroidissement (6) sont fixées sur le réflecteur (3).

18. Projecteur selon l'une au moins des revendications précédentes, **caractérisé en ce que** la face postérieure du réflecteur (3) est dotée de lamelles de refroidissement qui s'engagent à la manière d'un peigne dans les fentes (60) ménagées entre les lamelles de refroidissement (6) du caisson de refroidissement (5) par convection.

19. Projecteur selon l'une au moins des revendications précédentes, **caractérisé en ce que** le réflecteur (3) comporte des ouvertures d'aération qui débouchent dans les fentes (60) ménagées entre les lamelles de refroidissement (6).

20. Projecteur selon l'une au moins des revendications précédentes, comprenant un réflecteur à facettes avec une pluralité de facettes agencées en forme d'anneau autour du milieu du réflecteur suivant des lignes et des colonnes et formant une surface réfléchissante, **caractérisé en ce qu'**une zone du réflecteur (3), de forme annulaire comprenant une ou plusieurs lignes de facettes (33), est laissée libre et ménage ainsi une échancrure (36) dans la zone du réflecteur (3), à travers laquelle peut s'écouler un courant d'air de refroidissement à travers le réflecteur (3).

21. Projecteur selon l'une au moins des revendications précédentes, comprenant un réflecteur à facettes avec une pluralité de facettes agencées en forme d'anneau autour du milieu du réflecteur suivant des lignes et des colonnes en formant une surface réfléchissante, **caractérisé en ce qu'**une région du réflecteur (3), comprenant une ou plusieurs colonnes (34) de facettes (33), est laissée libre et ménage ainsi une échancrure (36) dans la surface du réflecteur (3), à travers laquelle peut s'écouler un courant d'air de refroidissement à travers le réflecteur (3).

22. Projecteur selon l'une des revendications 20 ou 21, **caractérisé en ce que** l'échancrure (36) est recouverte par un tronçon (34', 35b'), formé par des facettes réfléchissantes (33), qui est écarté radialement de la surface de réflecteur (3) et s'étend approximativement parallèlement à la surface du réflecteur (3) proprement dit.

23. Projecteur selon la revendication 22, **caractérisé en ce que** le tronçon formé pour recouvrir l'échancrure (36) est constitué de facettes (33), dont la conformation de surface et l'agencement sont tels que le réflecteur (3) engendre la répartition de lumière souhaitée.

24. Projecteur selon l'une au moins des revendications précédentes, **caractérisé en ce qu'**une tôle d'évacuation thermique (7) est agencée entre le réceptacle en verre (21) et les pointes de contact du moyen d'éclairage (2) et est orientée vers les paquets de lamelles de refroidissement (61, 62).

25. Projecteur selon la revendication 24, **caractérisé en ce que** la tôle d'évacuation thermique (7) est réalisée en forme de V, U ou S.

26. Projecteur selon la revendication 24 ou 25, **caractérisé en ce que** la tôle d'évacuation thermique (7) est reliée au socle (22) du moyen d'éclairage.

27. Projecteur selon la revendication 26, **caractérisé en ce que** la tôle d'évacuation thermique (7) est enfichée sur le socle (22) du moyen d'éclairage.

28. Projecteur selon la revendication 24 ou 25, **caractérisé en ce que** la tôle d'évacuation thermique (7) est reliée à la douille (4) pour le moyen éclairage, en particulier aux organes de serrage de lampe pour le moyen d'éclairage.

29. Projecteur selon l'une au moins des revendications précédentes, **caractérisé en ce que** le moyen éclairage (2), qui présente un contour de forme essentiellement cylindrique, est orienté en direction axiale du projecteur et est mis en place dans une ouverture centrale du réflecteur (3).

30. Projecteur selon la revendication 29, **caractérisé en ce que** le moyen d'éclairage (2) et le réflecteur (3) sont déplaçables l'un par rapport à l'autre en direction axiale.
